# EUROPEAN PATENT SPECIFICATION

(11) **EP 4 537 664 B1**
(45) Date of publication and mention of the grant of the patent: **09.12.2026**
(21) Application number: 24193281.3
(22) Date of filing: 07.08.2024
(51) Int. Cl.: A21C 1/02, A21C 1/14, B01F 27/806, B01F 27/922, B01F 29/85, B01F 33/81, B01F 35/92

(54) **METHOD FOR PREPARING A FOODSTUFF DOUGH**
VERFAHREN ZUR HERSTELLUNG EINES LEBENSMITTELTEIGS
PROCÉDÉ DE PRÉPARATION D'UNE PÂTE ALIMENTAIRE

(30) Priority: 13.10.2023 IT 202300021384
(43) Date of publication of application: 16.04.2025
(73) Proprietor: SANCASSIANO S.p.A., I-12060 Roddi d'Alba (Cuneo) (IT)
(72) Inventor: DROCCO, Davide, 12060 Roddi (CN) (IT)
(74) Representative: Buzzi, Notaro & Antonielli d'Oulx S.p.A.

(56) References cited:
- WO-A1-2018/193391
- CN-A- 112 931 549
- CN-U- 212 728 606
- CN-U- 219 701 646

## Description

The present invention relates to a method for preparing a foodstuff dough, preferably a dough for oven-baked products.

It is known in the art to prepare a foodstuff dough in pre-set thermal conditions with the aid of heat-conditioning means having the function of keeping the ingredients being processed within a pre-set temperature range.

In particular, it is known to use a tank for preparation of doughs that comprises a cavity for gathering ingredients, and a heat-conditioning chamber set in a heat-exchange relationship with one or more walls that delimit the aforesaid cavity.

Moreover, it is known to use an apparatus for preparing foodstuff doughs that comprises one or more kneading tools for carrying out a step of preparation of the dough on the ingredients contained in the tank, and further comprising a source for supplying a heat-conditioning fluid that is set in communication with the heat-conditioning chamber of the tank and supplies the heat-conditioning fluid to the heat-conditioning chamber of the tank so as to cool down or heat up the walls of the tank and consequently keep the ingredients being processed in the pre-set temperature range.

CN 112 931 549 A discloses a method according to the preamble of claim 1 and a corresponding system.

In this context, the present applicant has provided an improved solution that makes it possible to carry out more effective heat conditioning of the ingredients, carry out faster production cycles, and be more versatile in adapting to the needs of the specific applications.

In general, the solution described herein regards a method according to claim 1, and a system according to claim 8.

The claims form an integral part of the teaching provided herein.

Further characteristics and advantages of the present invention will emerge clearly from the ensuing description with reference to the annexed drawings, which are provided purely by way of non-limiting example and in which:

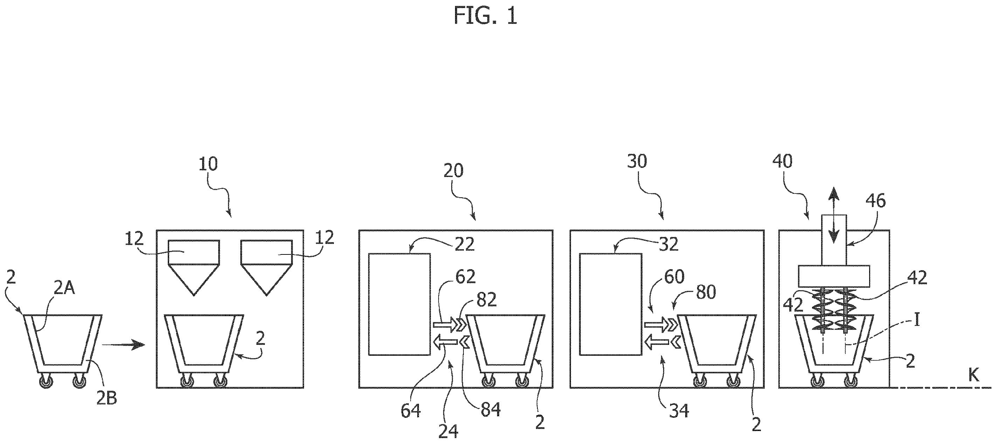

- Figure 1 is a schematic illustration of an example of the method and the system described herein.

In the ensuing description, various specific details are illustrated aimed at enabling an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the solution described herein regards the preparation of foodstuff doughs, preferably doughs for oven-baked products.

In general, the solution described herein relates to a method comprising the steps of:
- providing a tank for preparation of the dough, wherein the tank comprises a cavity for gathering ingredients, and a heat-conditioning chamber set in a heat-exchange relationship with one or more walls that delimit the gathering cavity of the tank;
- introducing into the tank one or more ingredients for preparation of the dough;
- positioning the tank in a heat-conditioning station comprising a source for supplying a heat-conditioning fluid, and via a connection system setting in fluid communication the chamber of the tank and the supply source of the heat-conditioning station;
- in the aforesaid condition of fluid communication between the chamber of the tank and the supply source of the heat-conditioning station, carrying out a step of heat conditioning of the ingredients gathered together in the cavity of the tank, wherein a heat-conditioning fluid is supplied by the supply source and made to circulate through the chamber of the tank; and
- removing the tank from the heat-conditioning station and transferring it to a subsequent operating station.

The step of introduction of the ingredients into the tank can be carried out before or after positioning of the tank in the heat-conditioning station.

The tank containing the ingredients on which the heat-conditioning step has been carried out is subsequently transferred to a station for preparation of the dough, which comprises a kneading unit equipped with at least one kneading tool; the tank is positioned within the station for preparation of the dough and, via the at least one kneading tool of the station, a step of preparation of the dough is carried out on the ingredients contained in the tank.

In one or more preferred embodiments, the method moreover envisages the use of at least one further tank for preparation of the dough, where the at least one further tank comprises a cavity for receiving ingredients and a heat-conditioning chamber set in a heat-exchange relationship with one or more walls that delimit the cavity of the tank.

In one or more preferred embodiments, the method includes the further steps of:
- introducing into the at least one further tank one or more ingredients for preparation of the dough;
- positioning the at least one further tank in the heat-conditioning station; and
- carrying out a step of heat conditioning of the ingredients gathered together in the at least one further tank, where a heat-conditioning fluid is supplied by the supply source and made to circulate through the chamber of the at least one further tank. Preferably, the heat-conditioning step carried out in the heat-conditioning station on the ingredients contained in the at least one further tank is performed simultaneously with the step of preparation of the dough that carried out in the station for preparation of the dough on the ingredients contained in the first tank.

Preferably, the heat-conditioning step and the step of preparation of the dough are carried out on the basis of one and the same cycle time.

In view of the foregoing, the solution described herein hence envisages carrying out the step of heat conditioning of the ingredients in an operating station distinct from the station for preparation of the dough.

Thanks to the above characteristic, the step of heat conditioning of the ingredients can be carried out in a way independent of the step of preparation of the dough and hence does not need to be constrained to the operating requirements of the station for preparation of the dough, such as the duration of the kneading operation or else the need to subject the tank to a motion of rotation during the kneading operation.

Consequently, the heat-conditioning step can be carried out during the same cycle time as that in which in the station for preparation of the dough preparation of the dough is carried out in a further tank.

In this way, the time necessary for carrying out the heat-conditioning step can be "masked" by the cycle time of the step of preparation of the dough.

Moreover, if the time necessary for carrying out the heat-conditioning step exceeds the cycle time of the step of preparation of the dough, it is possible to envisage two or more heat-conditioning stations so as to divide the heat-conditioning step into a number of sessions or substeps, each defined by a duration shorter than or equal to the cycle time of the step of preparation of the dough.

On the other hand, the solution described herein bestows ample freedom in developing a specific method for a given application, thanks precisely to the fact of having separated into two distinct stations the heat-conditioning step and the step of preparation of the dough.

For instance, after the heat-conditioning step, the method may envisage introduction of further ingredients into the tank and, possibly, execution of a second heat-conditioning step.

Once again by way of example, after the ingredients have been subjected to the step of preparation of the dough, the method may envisage carrying out a further heat-conditioning step, and possibly repeating the step of preparation of the dough.

As may be understood, the possibilities of configuration of the method are numerous, which renders the solution described herein very versatile.

With reference now to Figure 1, this is a schematic illustration of an example of implementation of the solution described herein.

In one or more preferred embodiments like the one illustrated, the method - and likewise the system described herein - comprises the use of a plurality of tanks 2 that are mobile for being positioned in the various operating stations provided.

Each tank 2 comprises a cavity 2A for gathering ingredients, and a heat-conditioning chamber 2B; for the cavity 2A and the heat-conditioning chamber 2B the teachings already presented above apply.

In the example illustrated, the tanks 2 are mobile on wheels; in any case, the mobility of the tanks 2 may be obtained also via means of some other type, for example, through mobile platforms capable of lifting the tanks and displacing them between the various operating stations.

In one or more preferred embodiments like the one illustrated, the system comprises, in succession along a processing path K, a first station 10 for introduction of the ingredients into the tanks 2, a first heat-conditioning station 20, a second heat-conditioning station 30, and finally a station for preparation of the dough 40.

In one or more preferred embodiments, the system comprises a conveyor system for feeding the individual tanks 2 along the processing path K and taking them to the various operating stations.

The station 10 may, for example, comprise a plurality of hoppers 12 containing different ingredients, which, in an automatic or semi-automatic way (by "semi-automatic way" is meant an operating mode in which one or more control or working operations are carried out by an operator), introduce the ingredients necessary for preparation of the dough into each tank 2 that positions itself within the station 30.

The first heat-conditioning station 20 and the second heat-conditioning station 30 comprise respective supply sources 22, 32, for supply of a heat-conditioning fluid, and respective connection systems 24, 34, configured for setting in fluid communication the supply sources 22, 32 with the heat-conditioning chambers 2B of the tanks 2 that are positioned in the stations.

The heat-conditioning stations 20, 30 may be configured for operating in an automatic or else semi-automatic way.

In one or more preferred embodiments, the connection system 24/34 of one or both of the two heat-conditioning stations 20, 30 comprises a connection unit 60, preferably of a fast-coupling type, which is configured for connecting up to a connection unit 80 provided on each of the tanks 2 and is set in fluid communication with the heat-conditioning chamber 2B of the respective tank.

In one or more preferred embodiments, the connection unit 60 of the heat-conditioning station 20/30 comprises a delivery coupling 62 and a return coupling 64.

In one or more preferred embodiments, the connection unit 80 of each tank 2 comprises an inlet coupling 82 and an outlet coupling 84 that are to couple, respectively, with the delivery coupling 62 and the return coupling 64 of the connection unit 60 of the heat-conditioning station.

In one or more preferred embodiments, in the heat-conditioning station 20/30 the source for supplying the heat-conditioning fluid 22/32 and the chamber 2B of the tank 2 are set in mutual communication so as to create a closed circuit for circulation of the heat-conditioning fluid so that, during the step of heat conditioning of the ingredients, the heat-conditioning fluid can circulate in a continuous way through the chamber 2B of the tank 2.

The station 40 for preparation of the dough comprises a pair of tools 42, which are rotatable about respective axes of rotation I and are configured for carrying out an action of kneading on the ingredients contained in each tank 2 that is positioned within the station.

In one or more preferred embodiments, the station 40 moreover comprises a system 46 for moving the two kneading tools 42 so as to insert them into the tank 2 that comes to position itself in the station for subjecting the ingredients contained therein to the kneading operation and to take them out of the tank at the end of the above operation. Alternatively, the station 40 may comprise a system for moving the tank 2 for the same purpose.

In one or more preferred embodiments, the station 40 may moreover be configured with means for driving a movement of rotation of the tank 2 itself simultaneously with the kneading operation carried out by the two kneading tools 42.

As for the previous stations, the station 40 for preparation of the dough may be configured for automatic or else semi-automatic operation.

In some applications, the method described herein may envisage that, after the heat-conditioning step carried out in the station 20 or 30, the tank 2 is brought back into the station 10 for introduction of further ingredients and, subsequently, positions itself again in the station 20 or 30 for execution of a further step of heat conditioning of the ingredients or else positions itself directly in the station 40 for preparation of the dough.

Moreover, in some applications, after the step of preparation of the dough carried out within the station 40, the tank 2 may return into the station 20 or 30 for execution of a further heat-conditioning step.

Of course,

the details of construction and the embodiments may vary, even significantly, with respect to what is illustrated herein purely by way of non-limiting example, without thereby departing from the scope of the invention, as defined by the annexed claims.

## Claims

1. A method for preparing a foodstuff dough, preferably a dough for oven-baked products, comprising the steps of:
- providing a tank (2) for preparation of said dough,
wherein said tank comprises a cavity (2A) for gathering ingredients, and a heat-conditioning chamber (2B) set in a heat-exchange relationship with one or more walls that delimit said cavity;
- introducing into said cavity of said tank (2) one or more ingredients for preparation of said dough;
- positioning said tank in a heat-conditioning station (20, 30) that comprises a source (22, 32) for supplying a heat-conditioning fluid, and via a connection system (24, 34) setting in fluid communication said chamber (2B) of said tank (2) and said supply source (22, 32) of said heat-conditioning station (20, 30);
wherein the step of introducing the ingredients into said tank (2) can be performed before or after the step of positioning said tank (2) in said heat-conditioning station (20, 30),
- in said condition of fluid communication between said chamber (2B) of said tank (2) and said supply source (22, 32) of said heat-conditioning station, carrying out a step of heat conditioning of said ingredients introduced into the cavity (2A) of said tank (2), wherein a heat-conditioning fluid is supplied by said supply source and made to circulate through said chamber of said tank; and
- removing said tank (2) from said heat-conditioning station and transferring said tank to a further operating station,
**characterized in** said method comprising, after said step of heat conditioning of said ingredients, the steps of:
- removing said tank (2) from said heat-conditioning station and transferring said tank to a station for preparation of the dough (40), wherein said station for preparation of the dough comprises a kneading unit equipped with at least one kneading tool (42); and
- positioning said tank (2) in said station for preparation of the dough (40) and, via said at least one kneading tool (42), carrying out a step of preparation of the dough on the ingredients contained in said cavity (2A) of said tank (2).

2. The method according to claim 1, comprising at least one further step of heat conditioning of said ingredients introduced into the cavity (2A) of said tank (2), which is carried out in said heat-conditioning station or else in a second heat-conditioning station, before or after said step of preparation of the dough.

3. The method according to claim 1, wherein said step of preparation of the dough includes driving said at least one kneading tool (42) according to a movement of kneading and simultaneously moving said tank (2) according to a movement of rotation about a preferably vertical axis of rotation.

4. The method according to claim 1, wherein said step of preparation of the dough includes driving said at least one kneading tool (42) according to a movement of kneading and simultaneously keeping said tank (2) fixed.

5. The method according to any one of the preceding claims, wherein the step of introduction of the ingredients is carried out in said heat-conditioning station or else in a further station distinct therefrom.

6. The method according to any one of the preceding claims, comprising at least one further tank (2) for preparation of said dough,
wherein said at least one further tank (2) comprises a cavity (2A) for gathering ingredients, and a heat-conditioning chamber (2B) set in a heat-exchange relationship with one or more walls that delimit said cavity (2A);
wherein said method includes:
- introducing into said cavity of said at least one further tank (2) one or more ingredients for preparation of said dough;
- positioning said at least one further tank (2) in said heat-conditioning station (20, 30); and
- carrying out a step of heat conditioning of said ingredients introduced into the cavity (2A) of said at least one further tank (2), wherein a heat-conditioning fluid is supplied by said supply source (22, 32) and made to circulate through said chamber (2A) of said at least one further tank (2),
wherein said heat-conditioning step carried out in said heat-conditioning station (20, 30) on the ingredients contained in said at least one further tank (2) is performed simultaneously with said step of preparation of the dough carried out in said station for preparation of the dough (40) on the ingredients contained in said tank (2).

7. The method according to claim 6, wherein said heat-conditioning step and said step of preparation of the dough are carried out on the basis of one and the same cycle time.

8. A system for implementation of a method for preparing a dough according to any one of the preceding claims, comprising:
- at least one tank (2), comprising a cavity (2A) for gathering ingredients, and a heat-conditioning chamber (2B) set in a heat-exchange relationship with one or more walls that delimit said cavity (2A);
- at least one heat-conditioning station (20, 30) comprising a source (22, 32) for supplying a heat-conditioning fluid and a connection system (24, 34) configured to set in fluid communication said supply source (22, 32) and the chamber (2B) of the tank (2) that positions itself in said heat-conditioning station (20, 30); and
- a station for preparation of the dough (40), comprising at least one kneading tool (42),
wherein said tank (2) is mobile for being transferred from said at least one heat-conditioning station (20, 30) to said station for preparation of the dough (40).

9. The system according to claim 8, wherein said at least one tank (2) is rotatable about a preferably vertical axis of rotation, or else is fixed in the sense that it does not have the possibility of rotating about an axis of rotation.

10. The system according to claim 8 or claim 9, comprising a plurality of tanks (2) and a conveyor system for carrying one tank after another to said at least one heat-conditioning station (20, 30) and to said station for preparation of the dough (40).

11. The system according to any one of claims 8 to 10, wherein via the connection system (24, 34) the source for supplying the heat-conditioning fluid (22, 32) and the chamber (2B) of the at least one tank (2) are configured to be set in mutual communication so as to create a closed circuit for circulation of the heat-conditioning fluid so that, during the step of heat conditioning of the ingredients, the heat-conditioning fluid can circulate in a continuous way through the chamber (2B) of the tank (2).

12. The system according to claim 8 or claim 11, wherein said connection system comprises a connection unit (60) that is in fluid communication with said supply source (22, 32), and wherein said at least tank (2) comprises a second connection unit (80) that is in fluid communication with said chamber (2B) of said tank (2), and wherein said first and second connection units (60, 80) are configured to be releasably coupled so as to set in fluid communication said supply source (22, 32) of said heat-conditioning station and said chamber (2B) of said tank (2), when said tank (2) is positioned in said heat-conditioning station (20, 30).

13. The system according to claim 12, wherein said connection unit (60) of the heat-conditioning station (20, 30) comprises a delivery coupling (62) and a return coupling (64), and said second connection unit of said at least one tank (2) comprises an inlet coupling (82) and an outlet coupling (84) that are to couple, respectively, with said delivery coupling and said return coupling of said connection unit of the heat-conditioning station.

14. The system according to any one of claims 8 to 13, comprising a station (10) for introduction of ingredients into said cavity (2A) of said at least one tank (2).

15. The system according to any one of claims 8 to 14, comprising a second heat-conditioning station (30), which comprises a source (32) for supplying a heat-conditioning fluid and a connection system (34) configured to set in fluid communication said supply source (32) and the chamber (2B) of the tank (2) that positions itself in said second heat-conditioning station (30).

## Patentansprüche

1. Verfahren zur Herstellung eines Lebensmittelteigs, vorzugsweise eines Teigs für ofengebackene Produkte, umfassend die Schritte:
- Bereitstellen eines Tanks (2) zur Herstellung des besagten Teigs,
wobei der besagte Tank einen Hohlraum (2A) zum Aufnehmen von Zutaten und eine Wärmekonditionierungskammer (2B) umfasst, die in einer Wärmeaustauschbeziehung mit einer oder mehreren Wänden steht, die den besagten Hohlraum begrenzen;
- Einführen in den besagten Hohlraum des besagten Tanks (2) einer oder mehrerer Zutaten zur Herstellung des besagten Teigs;
- Positionieren des besagten Tanks in einer Wärmekonditionierungsstation (20, 30), die eine Quelle (22, 32) zur Zufuhr eines Wärmekonditionierungsfluids umfasst, und Herstellen einer Fluidverbindung zwischen der besagten Kammer (2B) des besagten Tanks (2) und der besagten Zufuhrquelle (22, 32) der besagten Wärmekonditionierungsstation (20, 30) über ein Verbindungssystem (24, 34);
wobei der Schritt des Einführens der Zutaten in den besagten Tank (2) vor oder nach dem Schritt des Positionierens des besagten Tanks (2) in der besagten Wärmekonditionierungsstation (20, 30) durchgeführt werden kann,
- in dem besagten Zustand der Fluidverbindung zwischen der besagten Kammer (2B) des besagten Tanks (2) und der besagten Zufuhrquelle (22, 32) der besagten Wärmekonditionierungsstation, Durchführen eines Schritts der Wärmekonditionierung der besagten in den Hohlraum (2A) des besagten Tanks (2) eingeführten Zutaten, wobei ein Wärmekonditionierungsfluid von der besagten Zufuhrquelle zugeführt und durch die besagte Kammer des besagten Tanks zirkuliert wird; und
- Entfernen des besagten Tanks (2) aus der besagten Wärmekonditionierungsstation und Überführen des besagten Tanks zu einer weiteren Betriebsstation,
**dadurch gekennzeichnet, dass** das besagte Verfahren nach dem besagten Schritt der Wärmekonditionierung der besagten Zutaten die Schritte umfasst:
- Entfernen des besagten Tanks (2) aus der besagten Wärmekonditionierungsstation und Überführen des besagten Tanks zu einer Station zur Herstellung des Teigs (40), wobei die besagte Station zur Herstellung des Teigs eine Knetvorrichtung umfasst, die mit mindestens einem Knetwerkzeug (42) ausgestattet ist; und
- Positionieren des besagten Tanks (2) in der besagten Station zur Herstellung des Teigs (40) und, über das besagte mindestens eine Knetwerkzeug (42), Durchführen eines Schritts der Herstellung des Teigs an den in dem besagten Hohlraum (2A) des besagten Tanks (2) enthaltenen Zutaten.

2. Verfahren nach Anspruch 1, umfassend mindestens einen weiteren Schritt der Wärmekonditionierung der besagten in den Hohlraum (2A) des besagten Tanks (2) eingeführten Zutaten, der in der besagten Wärmekonditionierungsstation oder andernfalls in einer zweiten Wärmekonditionierungsstation durchgeführt wird, vor oder nach dem besagten Schritt der Herstellung des Teigs.

3. Verfahren nach Anspruch 1, wobei der besagte Schritt der Herstellung des Teigs das Antreiben des besagten mindestens einen Knetwerkzeugs (42) gemäß einer Knetbewegung und gleichzeitig das Bewegen des besagten Tanks (2) gemäß einer Drehbewegung um eine vorzugsweise vertikale Drehachse einschließt.

4. Verfahren nach Anspruch 1, wobei der besagte Schritt der Herstellung des Teigs das Antreiben des besagten mindestens einen Knetwerkzeugs (42) gemäß einer Knetbewegung und gleichzeitig das Fixiert-Halten des besagten Tanks (2) einschließt.

5. Verfahren nach einem der vorhergehenden Ansprüche, wobei der Schritt des Einführens der Zutaten in der besagten Wärmekonditionierungsstation oder andernfalls in einer davon verschiedenen weiteren Station durchgeführt wird.

6. Verfahren nach einem der vorhergehenden Ansprüche, umfassend mindestens einen weiteren Tank (2) zur Herstellung des besagten Teigs,
wobei der besagte mindestens eine weitere Tank (2) einen Hohlraum (2A) zum Aufnehmen von Zutaten und eine Wärmekonditionierungskammer (2B) umfasst, die in einer Wärmeaustauschbeziehung mit einer oder mehreren Wänden steht, die den besagten Hohlraum (2A) begrenzen;
wobei das besagte Verfahren einschließt:
- Einführen in den besagten Hohlraum des besagten mindestens einen weiteren Tanks (2) einer oder mehrerer Zutaten zur Herstellung des besagten Teigs;
- Positionieren des besagten mindestens einen weiteren Tanks (2) in der besagten Wärmekonditionierungsstation (20, 30); und
- Durchführen eines Schritts der Wärmekonditionierung der besagten in den Hohlraum (2A) des besagten mindestens einen weiteren Tanks (2) eingeführten Zutaten, wobei ein Wärmekonditionierungsfluid von der besagten Zufuhrquelle (22, 32) zugeführt und durch die besagte Kammer (2A) des besagten mindestens einen weiteren Tanks (2) zirkuliert wird,
wobei der besagte Wärmekonditionierungsschritt, der in der besagten Wärmekonditionierungsstation (20, 30) an den in dem besagten mindestens einen weiteren Tank (2) enthaltenen Zutaten durchgeführt wird, gleichzeitig mit dem besagten Schritt der Herstellung des Teigs durchgeführt wird, der in der besagten Station zur Herstellung des Teigs (40) an den in dem besagten Tank (2) enthaltenen Zutaten durchgeführt wird.

7. Verfahren nach Anspruch 6, wobei der besagte Wärmekonditionierungsschritt und der besagte Schritt der Herstellung des Teigs auf der Grundlage ein und derselben Zykluszeit durchgeführt werden.

8. System zur Implementierung eines Verfahrens zur Herstellung eines Teigs nach einem der vorhergehenden Ansprüche, umfassend:
- mindestens einen Tank (2), umfassend einen Hohlraum (2A) zum Aufnehmen von Zutaten und eine Wärmekonditionierungskammer (2B), die in einer Wärmeaustauschbeziehung mit einer oder mehreren Wänden steht, die den besagten Hohlraum (2A) begrenzen;
- mindestens eine Wärmekonditionierungsstation (20, 30), umfassend eine Quelle (22, 32) zur Zufuhr eines Wärmekonditionierungsfluids und ein Verbindungssystem (24, 34), das konfiguriert ist, um die besagte Zufuhrquelle (22, 32) und die Kammer (2B) des Tanks (2), der sich in der besagten Wärmekonditionierungsstation (20, 30) positioniert, in Fluidverbindung zu setzen; und
- eine Station zur Herstellung des Teigs (40), umfassend mindestens ein Knetwerkzeug (42),
wobei der besagte Tank (2) beweglich ist, um von der besagten mindestens einen Wärmekonditionierungsstation (20, 30) zu der besagten Station zur Herstellung des Teigs (40) überführt zu werden.

9. System nach Anspruch 8, wobei der besagte mindestens eine Tank (2) um eine vorzugsweise vertikale Drehachse drehbar ist oder andernfalls in dem Sinne fixiert ist, dass er nicht die Möglichkeit hat, um eine Drehachse zu rotieren.

10. System nach Anspruch 8 oder Anspruch 9, umfassend eine Vielzahl von Tanks (2) und ein Fördersystem zum Befördern eines Tanks nach dem anderen zu der besagten mindestens einen Wärmekonditionierungsstation (20, 30) und zu der besagten Station zur Herstellung des Teigs (40).

11. System nach einem der Ansprüche 8 bis 10, wobei über das Verbindungssystem (24, 34) die Quelle zur Zufuhr des Wärmekonditionierungsfluids (22, 32) und die Kammer (2B) des mindestens einen Tanks (2) konfiguriert sind, um in gegenseitige Verbindung gesetzt zu werden, um so einen geschlossenen Kreislauf zur Zirkulation des Wärmekonditionierungsfluids zu schaffen, sodass während des Schritts der Wärmekonditionierung der Zutaten das Wärmekonditionierungsfluid in kontinuierlicher Weise durch die Kammer (2B) des Tanks (2) zirkulieren kann.

12. System nach Anspruch 8 oder Anspruch 11, wobei das besagte Verbindungssystem eine Verbindungseinheit (60) umfasst, die in Fluidverbindung mit der besagten Zufuhrquelle (22, 32) steht, und wobei der besagte mindestens eine Tank (2) eine zweite Verbindungseinheit (80) umfasst, die in Fluidverbindung mit der besagten Kammer (2B) des besagten Tanks (2) steht, und wobei die besagten ersten und zweiten Verbindungseinheiten (60, 80) konfiguriert sind, um lösbar gekoppelt zu werden, um so die besagte Zufuhrquelle (22, 32) der besagten Wärmekonditionierungsstation und die besagte Kammer (2B) des besagten Tanks (2) in Fluidverbindung zu setzen, wenn der besagte Tank (2) in der besagten Wärmekonditionierungsstation (20, 30) positioniert ist.

13. System nach Anspruch 12, wobei die besagte Verbindungseinheit (60) der Wärmekonditionierungsstation (20, 30) eine Vorlaufkupplung (62) und eine Rücklaufkupplung (64) umfasst und die besagte zweite Verbindungseinheit des besagten mindestens einen Tanks (2) eine Einlasskupplung (82) und eine Auslasskupplung (84) umfasst, die jeweils mit der besagten Vorlaufkupplung und der besagten Rücklaufkupplung der besagten Verbindungseinheit der Wärmekonditionierungsstation zu koppeln sind.

14. System nach einem der Ansprüche 8 bis 13, umfassend eine Station (10) zum Einführen von Zutaten in den besagten Hohlraum (2A) des besagten mindestens einen Tanks (2).

15. System nach einem der Ansprüche 8 bis 14, umfassend eine zweite Wärmekonditionierungsstation (30), die eine Quelle (32) zur Zufuhr eines Wärmekonditionierungsfluids und ein Verbindungssystem (34) umfasst, das konfiguriert ist, um die besagte Zufuhrquelle (32) und die Kammer (2B) des Tanks (2), der sich in der besagten zweiten Wärmekonditionierungsstation (30) positioniert, in Fluidverbindung zu setzen.

## Revendications

1. Procédé de préparation d'une pâte alimentaire, de préférence une pâte pour produits cuits au four, comprenant les étapes consistant à :
- fournir une cuve (2) pour la préparation de ladite pâte,
dans lequel ladite cuve comprend une cavité (2A) pour recueillir des ingrédients, et une chambre de conditionnement thermique (2B) disposée en relation d'échange thermique avec une ou plusieurs parois qui délimitent ladite cavité ;
- introduire dans ladite cavité de ladite cuve (2) un ou plusieurs ingrédients pour la préparation de ladite pâte ;
- positionner ladite cuve dans une station de conditionnement thermique (20, 30) qui comprend une source (22, 32) pour fournir un fluide de conditionnement thermique, et par l'intermédiaire d'un système de raccordement (24, 34) mettre en communication fluidique ladite chambre (2B) de ladite cuve (2) et ladite source d'alimentation (22, 32) de ladite station de conditionnement thermique (20, 30) ;
dans lequel l'étape d'introduction des ingrédients dans ladite cuve (2) peut être réalisée avant ou après l'étape de positionnement de ladite cuve (2) dans ladite station de conditionnement thermique (20, 30),
- dans ladite condition de communication fluidique entre ladite chambre (2B) de ladite cuve (2) et ladite source d'alimentation (22, 32) de ladite station de conditionnement thermique, réaliser une étape de conditionnement thermique desdits ingrédients introduits dans la cavité (2A) de ladite cuve (2), dans lequel un fluide de conditionnement thermique est fourni par ladite source d'alimentation et amené à circuler à travers ladite chambre de ladite cuve ; et
- retirer ladite cuve (2) de ladite station de conditionnement thermique et transférer ladite cuve vers une autre station de fonctionnement,
**caractérisé en ce que** ledit procédé comprend, après ladite étape de conditionnement thermique desdits ingrédients, les étapes consistant à :
- retirer ladite cuve (2) de ladite station de conditionnement thermique et transférer ladite cuve vers une station de préparation de la pâte (40), dans lequel ladite station de préparation de la pâte comprend une unité de pétrissage équipée d'au moins un outil de pétrissage (42) ; et
- positionner ladite cuve (2) dans ladite station de préparation de la pâte (40) et, par l'intermédiaire dudit au moins un outil de pétrissage (42), réaliser une étape de préparation de la pâte sur les ingrédients contenus dans ladite cavité (2A) de ladite cuve (2).

2. Procédé selon la revendication 1, comprenant au moins une autre étape de conditionnement thermique desdits ingrédients introduits dans la cavité (2A) de ladite cuve (2), qui est réalisée dans ladite station de conditionnement thermique ou bien dans une deuxième station de conditionnement thermique, avant ou après ladite étape de préparation de la pâte.

3. Procédé selon la revendication 1, dans lequel ladite étape de préparation de la pâte inclut d'entraîner ledit au moins un outil de pétrissage (42) selon un mouvement de pétrissage et simultanément de déplacer ladite cuve (2) selon un mouvement de rotation autour d'un axe de rotation de préférence vertical.

4. Procédé selon la revendication 1, dans lequel ladite étape de préparation de la pâte inclut d'entraîner ledit au moins un outil de pétrissage (42) selon un mouvement de pétrissage et simultanément de maintenir ladite cuve (2) fixe.

5. Procédé selon l'une quelconque des revendications précédentes, dans lequel l'étape d'introduction des ingrédients est réalisée dans ladite station de conditionnement thermique ou bien dans une autre station distincte de celle-ci.

6. Procédé selon l'une quelconque des revendications précédentes, comprenant au moins une autre cuve (2) pour la préparation de ladite pâte,
dans lequel ladite au moins une autre cuve (2) comprend une cavité (2A) pour recueillir des ingrédients, et une chambre de conditionnement thermique (2B) disposée en relation d'échange thermique avec une ou plusieurs parois qui délimitent ladite cavité (2A) ;
dans lequel ledit procédé inclut :
- introduire dans ladite cavité de ladite au moins une autre cuve (2) un ou plusieurs ingrédients pour la préparation de ladite pâte ;
- positionner ladite au moins une autre cuve (2) dans ladite station de conditionnement thermique (20, 30) ; et
- réaliser une étape de conditionnement thermique desdits ingrédients introduits dans la cavité (2A) de ladite au moins une autre cuve (2), dans lequel un fluide de conditionnement thermique est fourni par ladite source d'alimentation (22, 32) et amené à circuler à travers ladite chambre (2A) de ladite au moins une autre cuve (2),
dans lequel ladite étape de conditionnement thermique réalisée dans ladite station de conditionnement thermique (20, 30) sur les ingrédients contenus dans ladite au moins une autre cuve (2) est effectuée simultanément à ladite étape de préparation de la pâte réalisée dans ladite station de préparation de la pâte (40) sur les ingrédients contenus dans ladite cuve (2).

7. Procédé selon la revendication 6, dans lequel ladite étape de conditionnement thermique et ladite étape de préparation de la pâte sont réalisées sur la base d'un seul et même temps de cycle.

8. Système pour la mise en œuvre d'un procédé de préparation d'une pâte selon l'une quelconque des revendications précédentes, comprenant :
- au moins une cuve (2), comprenant une cavité (2A) pour recueillir des ingrédients, et une chambre de conditionnement thermique (2B) disposée en relation d'échange thermique avec une ou plusieurs parois qui délimitent ladite cavité (2A) ;
- au moins une station de conditionnement thermique (20, 30) comprenant une source (22, 32) pour fournir un fluide de conditionnement thermique et un système de raccordement (24, 34) configuré pour mettre en communication fluidique ladite source d'alimentation (22, 32) et la chambre (2B) de la cuve (2) qui se positionne dans ladite station de conditionnement thermique (20, 30) ; et
- une station de préparation de la pâte (40), comprenant au moins un outil de pétrissage (42),
dans lequel ladite cuve (2) est mobile pour être transférée de ladite au moins une station de conditionnement thermique (20, 30) à ladite station de préparation de la pâte (40).

9. Système selon la revendication 8, dans lequel ladite au moins une cuve (2) est apte à tourner autour d'un axe de rotation de préférence vertical, ou bien est fixe au sens où elle n'a pas la possibilité de tourner autour d'un axe de rotation.

10. Système selon la revendication 8 ou la revendication 9, comprenant une pluralité de cuves (2) et un système de convoyage pour amener une cuve après l'autre à ladite au moins une station de conditionnement thermique (20, 30) et à ladite station de préparation de la pâte (40).

11. Système selon l'une quelconque des revendications 8 à 10, dans lequel, par l'intermédiaire du système de raccordement (24, 34), la source pour fournir le fluide de conditionnement thermique (22, 32) et la chambre (2B) de l'au moins une cuve (2) sont configurées pour être mises en communication mutuelle de manière à créer un circuit fermé pour la circulation du fluide de conditionnement thermique de sorte que, pendant l'étape de conditionnement thermique des ingrédients, le fluide de conditionnement thermique peut circuler de manière continue à travers la chambre (2B) de la cuve (2).

12. Système selon la revendication 8 ou la revendication 11, dans lequel ledit système de raccordement comprend une unité de raccordement (60) qui est en communication fluidique avec ladite source d'alimentation (22, 32), et dans lequel ladite au moins une cuve (2) comprend une deuxième unité de raccordement (80) qui est en communication fluidique avec ladite chambre (2B) de ladite cuve (2), et dans lequel lesdites première et deuxième unités de raccordement (60, 80) sont configurées pour être accouplées de manière libérable de manière à mettre en communication fluidique ladite source d'alimentation (22, 32) de ladite station de conditionnement thermique et ladite chambre (2B) de ladite cuve (2), lorsque ladite cuve (2) est positionnée dans ladite station de conditionnement thermique (20, 30).

13. Système selon la revendication 12, dans lequel ladite unité de raccordement (60) de la station de conditionnement thermique (20, 30) comprend un raccord de refoulement (62) et un raccord de retour (64), et ladite deuxième unité de raccordement de ladite au moins une cuve (2) comprend un raccord d'entrée (82) et un raccord de sortie (84) qui sont destinés à s'accoupler, respectivement, avec ledit raccord de refoulement et ledit raccord de retour de ladite unité de raccordement de la station de conditionnement thermique.

14. Système selon l'une quelconque des revendications 8 à 13, comprenant une station (10) pour l'introduction d'ingrédients dans ladite cavité (2A) de ladite au moins une cuve (2).

15. Système selon l'une quelconque des revendications 8 à 14, comprenant une deuxième station de conditionnement thermique (30), qui comprend une source (32) pour fournir un fluide de conditionnement thermique et un système de raccordement (34) configuré pour mettre en communication fluidique ladite source d'alimentation (32) et la chambre (2B) de la cuve (2) qui se positionne dans ladite deuxième station de conditionnement thermique (30).
